# EUROPEAN PATENT SPECIFICATION

(11) **EP 0 589 105 B1**
(45) Date of publication and mention of the grant of the patent: **26.07.1995**
(21) Application number: 92308638.3
(22) Date of filing: 23.09.1992
(51) Int. Cl.: A23K 1/16, A23K 1/18

(54) **Improvement in livestock raising**
Verfahren zur Erhöhung der Zucht von Vieh
Procédé pour l'amélioration de l'élevage de bétail

(43) Date of publication of application: 30.03.1994
(73) Proprietor: OHTA'S ISAN CO., LTD., Bunkyo-ku, Tokyo (JP)
(72) Inventor: Hosono, Tuyosi, Chiba-shi, Chiba-ken (JP); Niiho, Yujiro, Inashiki-gun, Ibaraki-ken (JP); Nakajima, Yoshijiro, Tokyo-to (JP); Maruyama, Akira, Takamatsu-shi, Kagawa-ken (JP); Yamazaki, Takashi, Toride-shi, Ibaraki-ken (JP); Itou, Hiroshi, Ichikawa-shi, Chiba-ken (JP)
(74) Representative: Baverstock, Michael George Douglas

(56) References cited:
- EP-A- 0 183 245
- WO-A-88/07822
- WO-A-89/06496
- DE-A- 4 040 874
- JP-A-63 287 462
- US-A- 3 669 689
- US-A- 3 959 519
- US-A- 4 355 024
- JOURNAL OF ANIMAL SCIENCE vol. 53, no. 5, 1981, pages 1297 - 1308 J. A. DECUYPERE ET AL. 'IN VITRO and IN VIVO protein digestion in pigs fed diets containing soybean protein isolates with different physical properties'
- DATABASE WPIL Week 9239, Derwent Publications Ltd., London, GB; AN 92-319231
- ANNALI DELLA FACOLTA DI MEDICINA VETERINARIA DI PARMA vol. 2, 1982, IT pages 81 - 101 A. BONOMI ET AL. 'Gli idrolisati proteici nell'alimentazione dei suini produttori di carne da consumare fresca'
- SUINICOLTURA vol. 22, no. 3, 1981, IT pages 25 - 35 A. MORDENTI ET AL. 'Nutrizione azotata del suino: ruolo degli aminoacidi liberi e degli oligopeptidi'
- Compendium of Chemical Terminology (V.Gold et al)

## Description

The present invention relates to an improvement in livestock raising and, more particularly, to an improvement in livestock raising of animals and poultry for meat production so as to greatly promote growth thereof but still with improved meat quality.

Husbandry animals in general are raised through the stages of maternal feeding, provisioning, weaning and feeding with various types of regular feeds. For example, provisioning of a youngling pig is started usually after one week from its birth followed by weaning on about the 25th day after its birth to proceed in ordinary feeding with regular feeds. The body weight of hogs thus raised for about 30 weeks reaches 100 to 120 kg and the hogs are then forwarded to butchery where they are dressed to carcasses and further to pork for cooking or for further processing into smoked hams, bacons, sausages and the like.

Needless to say, the most important economical factor in livestock raising or hog raising for meat production is to produce a larger amount of the meat with a unit amount of feed consumption within as short as possible raising period. As a measure, this problem is sometimes considered in terms of the relative feed demand which is the ratio of the amount of feed ingestion to the amount of body weight increase per animal for the raising period. With an object of decreasing the relative feed demand or to obtain a body-weight increasing effect, various proposals and attempts have been made heretofore, according to most of which the animals are raised with a feed admixed with a certain growth-promoting additive. Examples of such a growth-promoting additive for livestock raising so far proposed include prenylamine compounds acting on the intestinal flora of the hogs disclosed in Japanese Patent Kokai 60-41447, thioglycols and thioauxins having a promoting effect on protein synthesis disclosed in Japanese Patent Kokai 61-115021, higher straight-chain saturated alcohols disclosed in Japanese Patent Kokai 61-132142, certain derivatives of imidazoline and triazine disclosed in Japanese Patent Kokai 61-56047, microorganisms such as Lactobacillus bifidus disclosed in Japanese Patent Kokai 62-104552, certain copper compounds disclosed in Japanese Patent Kohyo 01-502878, porcine growth hormone analogues disclosed in Japanese Patent Kohyo 01-502480 and so on. In particular, a report from Cornell University teaches that a body-weight increasing effect of 8 to 13% can be obtained in hog raising by administrating the hogs with 50 to 200 mg/kg/day of a porcine growth hormone which is a product obtained by an appropriate application of gene recombination technology.

Although the above described additives are not ineffective or indeed effective at least to some extent for growth promotion or for decreasing the relative feed demand, the results obtained therewith are not without problems left unsolved. If not to mention the problem of safety of the additive against the healthy condition of the hogs raised therewith as well as the thus produced meat as a human food, another important problem to be considered is the quality of the meat. A most important parameter having significance on meat quality is the content of fat relative to the lean of the meat. When hogs are raised with a target to achieve an increase in the body weight as rapidly as possible, the content of fat in the meat is sometimes greatly increased thus causing degrading of meat quality. For example, it was reported in an agricultural conference in the United States held in 1967 that the content of fat in pork may reach 36.0%, 43.5% and 52.2% for hogs having a body weight of 60 to 80 kg, 80 to 100 kg and 100 to 120 kg, respectively. In other words, the body weight increase at the later growth stage of hogs is a result largely of increase in the amount of accumulated fat. When the feed ingestion of a hog is overly in excess of the amount required for life-sustaining and growth, body fat is synthesized in the body from not only oleaginous constituents but also carbohydrates and proteins in the feed through acetyl-CoA and the like. When the content of fat in pork exceeds a certain limit, the pork is of little value as a food, sometimes entirely losing commercial value as in the case of the so-called yellowish pork.

As is well known as a social issue in a number of advanced countries in recent years, overly ingestion of oils and fats is strongly suspected to cause various diseases and unhealthy conditions of the human body. For example, a correlation is reported between the amount of fat ingestion and death rate by breast cancer and between the amount of cholesterol and death rate by ischemic heart diseases. Accordingly, it is strongly desired to decrease the content of fat in foods in general.

Various attempts and proposals also have been made heretofore to supply low-fat pork including development of novel breeds of hogs and improvement in the constituents of feeds as well as admixture of the feed with fat-decreasing additives. Examples of such an additive for fat decreasing in hogs include bile powders disclosed in Japanese Patent Kokai 62-143647, porcine growth hormone analogues disclosed in Japanese Patent Kohyo 01-502480, porcine somatotropin prepared by utilizing gene recombination technology disclosed in Proceedings of the 1986 Cornell Nutrition Conference, and so on. These prior art methods, however, do not provide a complete solution of the problem due to the insufficient fat-decreasing effect or incompatibility of the body-weight increasing effect and the fat-decreasing effect.

US-A-4 355 024 describes the stimulation of growth of animals such as swine and cattle by feeding them a feed containing the methyl ester of aspartyl-phenylalanine.

US-A-3 669 689 discloses a fodder for pigs containing an ornithine-aspartic acid peptide.

WO-A-8906496 describes a method for increasing weight gain of animals (such as pigs) by orally administering β-casomorphin.

EP-A-0 183 245 proposes the administration to swine of a feed ration containing a peptide comprising 3 to 4 amino acid residues as an animal growth promotant.

WO-A-8 807 822 describes protein degradation products obtained by mineral acid hydrolysis of protein materials for use as a precursor for meat aromas and as a protein source in animal feedstuffs.

The present invention provides an improvement in raising of livestock and, in particular, hogs for meat production by a novel, simple, economic and safe method for promoting growth or decreasing the relative feed demand without increasing or rather with a decrease in the content of fat in the meat and, in particular, pork.

Thus, the improvement of the present invention to achieve the above mentioned object in livestock raising comprises use of an oligopeptide comprising amino acid residues of 10 or less in number on average per molecule, said oligopeptide being a partial enzymatic hydrolysis product of soybean protein, in feeding livestock to promote growth and improve meat quality. Preferably the average number of the amino acid residues per molecule of the oligopeptide is in the range from 2 to 3.

The amount of the oligopeptide intake in the feeding of a hog is usually in such a range that the feed to hogs is admixed with from 0.005 to 1.0% by weight or, preferably, from 0.1 to 0.5% by weight of the oligopeptide.

As is described above, the desired effects of improvement in livestock raising can be achieved by merely feeding the livestock or hogs with a small amount of the oligopeptide, which can be admixed with a regular feed to hogs, so that the improved method of the invention for livestock raising is very simple, economic and safe.

The oligopeptide here implied is an enzymatic partial hydrolysis product of a protein and comprises 10 or less of the amino acid residues per molecule. The number of the amino acid residues in the oligopeptide molecules can be controlled by adequately selecting the types of the enzyme and the conditions of the enzymatic hydrolysis reaction. Although the average number of the amino acid residues per molecule of the oligopeptide used in the invention can be as high as 10 as is the case in the so-called crude oligopeptide product, it is preferable to use an oligopeptide mixture of which the average number of the amino acid residues per molecule is in the range from 2 to 3, which is referred to as a low-molecular peptide or LMP hereinbelow. It is preferable that the oligopeptide mixture used in the invention contains at least 70% by weight of the LMP, i.e. oligopeptide of 2 or 3 amino acid residues per molecule. Any LMP product prepared by the partial hydrolysis of a protein necessarily contains more or less of free amino acids but the content of the free amino acids in the LMP product should be as low as possible since free amino acids are ineffective relative to the object of the present invention. A content of free amino acids lower than 5% by weight of the LMP has no poarticular adverse effect. Similarly, it is preferable that the content of the polypeptides, of which the number of the amino acid residues exceeds 10 per molecule, as a hydrolysis product of the enzymatic hydrolysis of a protein is as low as possible.

The protein source material from which a crude oligopeptide and LMP is prepared by enzymatic partial hydrolysis is soybean protein. Since this protein source itself has a value as a good, the oligopeptide as a partial hydrolysis product thereof also has no problems of safety not only in the livestock raised therewith but also in the health of the human body ingesting the meat of the livestock raised therewith. For example, an acute toxicity test by oral administration thereof was undertaken with mice as the test animals.

Thus, thirty healthy male mice of the ddy-lineage each having a body weight of 20 to 30 g in three equal groups were raised for 1 week after their birth preliminarily at a temperature of 22 ± 1 °C in an atmosphere of relative humidity of 55 ± 5%. Thereafter, they were orally administered 10 g/kg of a crude oligopeptide mixture of soybean origin for the first group, with 10 g/kg of a LMP for the second group and 10 ml/kg of a 1.0% aqueous solution of gum arabic for the third group as a control and their movement behavior was observed for 60 minutes after administration according to the Irwin's multi-dimensional observation method along with recording of the number of deaths after 72 hours from administration. The results were that absolutely no difference was noted among these three groups relative to the movement behavior and no cases of death were recorded in any of the three groups. It was therefore concluded that the values of LD₅₀ of the crude oligopeptide and LMP in this acute toxicity test were each at least 10 g/kg.

As to feed formulation in hog raising, ingestion of the oligopeptide can be continued throughout the raising period except the 4 to 5 weeks period after birth. For example, hoglings 5 weeks old having a body weight of about 10 kg can be raised for the subsequent several weeks with a feed admixed with the oligopeptide so that a remarkable improvement can be obtained in body weight increase to exhibit a growth-promoting effect. It is, however, preferable that ingestion of the oligopeptide is limited for the period of 5 to 10 weeks before the end of the raising period from the standpoint of economy. Specifically, the regular feed during the above mentioned treatment period is admixed with from 0.005 to 1.0% by weight or, preferably, from 0.1 to 0.5% by weight of the oligopeptide or, preferably, LMP, which is available in the form of a powder or granules. This mixing proportion of the oligopeptide in a regular feed is applicable also to the feed of other husbandry animals and poultry for meat production.

In the following, the improvement achieved by the present invention is illustrated in more detail by way of examples using hogs as the test animals.

### Example 1.

### [Hog raising]

Thirty hogs of the L × W Dekalb breed, consisting of 15 females and 15 males as castrated shortly after birth, were used as the test animals in three equal groups. Raising them for the first 25 weeks after their birth was conducted according to an ordinary schedule including start of provisioning at their 1 week age and weaning at their 25 day age. The test feeding was started at the beginning of the 26th week, when the hogs had an average body weight of 83.6 kg, by feeding the hogs of the three groups with different feeds.

Thus, the hogs of the first group (Group I) as a control were raised with a standard assorted feed consisting of 80% by weight of cereal grains including Indian corn, milo and wheat, 12% by weight of a vegetable oil meal, 2% by weight of cereal brans, i.e. corn gluten feed, and 3% by weight of other ingredients including molasses, fats, calcium phosphate and calcium carbonate.

The hogs of the second group (Group II) for the test of the inventive method were raised with the same standard assorted feed as above with admixture of 0.32% by weight of a LMP prepared by the enzymatic hydrolysis of de-fatted soybeans, of which the average number of the amino acid residues was 3.0 per molecule.

The hogs of the third group (Group III) for a comparative test were raised with the same standard assorted feed as above with admixture of 0.32% by weight of a mixture of 18 kinds of amino acids in a formulation corresponding to the same amino acid composition as in the product by the complete hydrolysis of the above mentioned LMP used for the second group.

### [Growth-promoting effect]

Raising of the hogs of each group in the 26th week and later on was continued in the above described manner. The average body weight of the ten hogs in each group was 108.9 ± 2.80%, 115.2 ± 2.81% and 109.6 ± 3.34% for the Groups I, II and III, respectively, on the last day of the 27th week based on the average body weight at the start of the test, i.e. on the first day of the 26th week. The result for Group II was significant with a 95% significant level by the t-test as compared with the result of Group I.

Next, the ten animals in each of the three groups were classified into 4 sub-groups by body weight increment on the last day of the 27th week. The results were as shown in Table 1 below. The results for Group II were significant as compared with the control group at a 95% significant level in the χ²-test for 3 columns and 4 lines with a freedom of 6.

**Table 1**

| Body weight increment, kg | <5 | 5-10 | 10-15 | >15 |
|---|---|---|---|---|
| Group I | 2 | 7 | 1 | 0 |
| Group II | 0 | 1 | 7 | 2 |
| Group III | 0 | 6 | 4 | 0 |

As is clear from the above results, feeding of hogs with the LMP-added feed was significantly effective in promoting body weight increase in hogs while the amino acid mixture was ineffective, exhibiting no significant body-weight increasing effect as compared with the control group raised with the standard feed only.

Further, the relative feed demand was determined for each of the hogs being raised for the period between the starting day of the test and the day when the body weight of the hog had reached 100 ± 10 kg by successively eliminating the hogs of which the body weight had exceeded this limit. This is because the hogs of this breed are forwarded to butchery usually when the body weight has reached this level so that the data obtained thereafter may not serve for the practical purpose. Table 2 below summarizes the average values of the feed intake (A) in g, body weight increment (B) in g and relative feed demand (A/B) each per day per animal for each of the three groups obtained during the period of 21 days after the start of the test.

**Table 2**

| Group No. | Feed intake, g (A) | Body weight increment, g (B) | Relative feed demand (A/B) |
|---|---|---|---|
| I | 2806 | 644 | 4.357 |
| II | 3030 | 803 | 3.773 |
| III | 2699 | 527 | 5.121 |

The above given results indicate more than 10% saving in the feed demand by the administration of the oligopeptide according to the invention.

### [Fat-decreasing effect]

Raising of the 30 hogs in the above mentioned three groups was continued in the same manner until the end of the fourth week from the start of the test. After measuring the body weight of each of the hogs, they were forwarded to butchery and dressed into carcasses by removing the bones. Table 3 below gives the average body weight (C) in kg and average carcass weight (D) in kg for each of the three groups. Further, measurements were made of the thickness of the fatback layer (E) in mm at the center in the cross section of the roast meat by using slide calipers. Table 3 also gives the average values of E in mm, E/C in mm/kg and E/D in mm/kg for each group.

**Table 3**

| Group No. | I | II | III |
|---|---|---|---|
| Body weight, kg (C) | 101.7 ± 3.4 | 105.6 ± 2.4 | 101.7 ± 1.3 |
| Carcass weight, kg (D) | 73.3 ± 1.9 | 77.6 ± 2.2 | 76.6 ± 1.1 |
| Thickness of fat layer, mm (E) | 20.0 ± 1.9 | 17.7 ± 1.1 | 18.8 ± 1.8 |
| E/C, mm/kg | 0.199±0.020 | 0.171±0.012 | 0.185±0.018 |
| E/D, mm/kg | 0.274±0.024 | 0.232±0.013 | 0.245±0.023 |

Further, measurement of the amount of fat was conducted by the AOAC method for roast meat, i.e. the meat on both sides of the hog back from the cervical region to the caudal region, as a whole and the lean in the roast meat for Groups I and II to give the results shown in Table 4 below giving the percentages of fat content in the respective meats. As is clear from these results, the content of fat could be decreased by 26.0% and 23.2% in the roast meat as a whole and in the lean of the roast meat, respectively, by feeding the hogs with the oligopeptide-admixed feed in Group II as compared with Group I for control.

**Table 4**

| Group No. | Fat content in roast meat, % | Fat content in lean meat, % |
|---|---|---|
| I | 34.3 ± 1.12 | 6.97 ± 0.073 |
| II | 25.4 ± 0.05 | 5.35 ± 0.092 |

Separately, livers taken from the butchered hogs of Groups I and II were subjected to extraction of the lipids with a 2:1 mixture of chloroform and methyl alcohol according to Folch's method, of which the contents of the triglycerides (TG), cholesterol (CH) and phospholipids (PL) were determined by the enzymatic method, cholesterol-oxidase method and enzymatic method, respectively, using the respective standard testing kits to give the results shown in Table 5 below giving the respective contents in mg/g of liver. As is clear from the results, the values of TG, CH and PL in Group II were smaller than the values in Group I by 60.4%, 9.9% and 51.1%, respectively.

**Table 5**

| Group No. | Content, mg, in g of liver | | |
|---|---|---|---|
| | TG | CH | PL |
| I | 13.32 ± 0.78 | 4.73 ± 0.33 | 17.12 ± 1.19 |
| II | 5.28 ± 1.71 | 4.26 ± 0.53 | 8.38 ± 1.88 |

### Example 2.

With an object of demonstrating the growth-promoting effect of the inventive method also on hoglings, 30 hoglings of the same breed as in Example 1 in three groups were subjected to the four-weeks test at the end of the 5th week from their birth. The average body weight of the ten hoglings was 10.2 kg in each of the three groups at the start of the test Thus, the ten hoglings of the first group (Group IV) were raised with a standard feed formulated for hoglings alone while the ten hoglings in each of the second and third groups (Groups V and VI) were raised for four weeks with the same feed but admixed with 0.1% by weight and 0.5% by weight, respectively, of the same LMP as used in Example 1. One of the ten hoglings in Group IV died for an unknown reason during the period of the third and fourth weeks of the test.

The body weight of the hoglings of these three groups was measured at the end of the second and fourth weeks of the testing period to give the results shown in Table 6 below for the average increments in body weight in kg for each of the three groups. As is clear from these results, addition of the oligopeptide to the feed for hoglings is effective in promoting the growth of hoglings and the effect by the admixture of 0.1% by weight of the oligopeptide was rather better than the result obtained by the 0.5% by weight admixture.

**Table 6**

| Group No. | Average increment in body weight, kg, at the end of | |
|---|---|---|
| | 2nd week | 4th week |
| IV | 4.8 ± 2.5 | 13.8 ± 1.5 |
| V | 7.1 ± 1.4 | 16.5 ± 2.6 |
| VI | 6.6 ± 1.6 | 15.4 ± 2.4 |

Table 7 below shows the relative feed demand in each of the three groups for the periods of the first to second weeks and the third to fourth weeks. The results are given for two runs of the repeated tests. Thus, it is clear that more than 10% saving can be obtained in the relative feed demand according to the inventive method even in hoglings under raising.

**Table 7**

| Group No. | Relative feed demand for the testing period of | |
|---|---|---|
| | 1st-2nd weeks | 3rd-4th weeks |
| IV | 2.00 ± 0.13 | 1.97 ± 0.18 |
| V | 1.76 ± 0.08 | 1.81 ± 0.01 |
| VI | 1.79 ± 0.04 | 1.80 ± 0.03 |

## Claims

1. Use of an oligopeptide comprising amino acid residues of 10 or less in number on average per molecule, said oligopeptide being a partial enzymatic hydrolysis product of soybean protein, in feeding livestock to promote growth and improve meat quality.

2. Use as claimed in claim 1 in which the average number of the amino acid residues per molecule of the oligopeptide is in the range from 2 to 3.

3. Use as claimed in claim 1 or claim 2 in which the livestock is fed with a feed blended with the oligopeptide.

4. Use as claimed in claim 3 in which the amount of the oligopeptide blended with the feed is in the range from 0.001 to 0.5% by weight of the feed.

5. Use as claimed in any one of the preceding claims wherein the livestock are hogs.

6. Use as claimed in claim 5 in which the hog is fed with the oligopeptide during a period of 10 weeks before forwarding to butchery to produce pork.

## Patentansprüche

1. Verwendung von Oligopeptiden, die im Mittel höchstens 10 Aminosäurereste pro Molekül enthalten und Produkte einer partiellen enzymatischen Hydrolyse von Sojabohnenprotein darstellen, beim Füttern von Vieh zur Förderung des Wachstums und zur Verbesserung der Fleischqualität.

2. Verwendung nach Anspruch 1, wobei die mittlere Anzahl der Aminosäurereste pro Molekül des Oligopeptids im Bereich von 2 bis 3 liegt.

3. Verwendung nach Anspruch 1 oder 2, wobei das Vieh mit einem Futter gefüttert wird, das mit dem Oligopeptid gemischt ist.

4. Verwendung nach Anspruch 3, wobei die Menge des mit dem Futter gemischten Oligopeptids im Bereich von 0,001 bis 0,5 Gew.-%, bezogen auf das Futter, liegt.

5. Verwendung nach einem der vorhergehenden Ansprüche, wobei es sich bei dem Vieh um Schweine handelt.

6. Verwendung nach Anspruch 5, wobei die Schweine während eines Zeitraums von 10 Wochen vor der Anlieferung zum Schlachten mit den Oligopeptiden gefüttert werden.

## Revendications

1. Utilisation d'un oligopeptide comprenant des résidus d'acides aminés au nombre de 10 ou moins en moyenne par molécule, ledit oligopeptide étant un produit d'hydrolyse enzymatique partielle d'une protéine de soja, pour alimenter du bétail pour provoquer une croissance et améliorer la qualité de la viande.

2. Utilisation comme revendiquée à la revendication 1 dans laquelle le nombre moyen des résidus d'acides aminés par molécule de l'oligopeptide est dans l'intervalle de 2 à 3.

3. Utilisation comme revendiquée dans la revendication 1 ou la revendication 2 dans laquelle le bétail est alimenté avec une nourriture mélangée avec l'oligopeptide.

4. Utilisation comme revendiquée dans la revendication 3 dans laquelle la quantité de l'oligopeptide mélangé avec la nourriture est dans l'intervalle de 0,001 à 0,5 % de la nourriture.

5. Utilisation comme revendiquée dans l'une quelconque des revendications précédentes dans laquelle le bétail est des porcs.

6. Utilisation comme revendiquée dans la revendication 5 dans laquelle le cochon est nourri avec l'oligopeptide durant une période de 10 semaines avant de l'envoyer à l'abattage pour produire du porc.
